# EUROPÄISCHE PATENTSCHRIFT

(11) **EP 1 262 347 B1**
(45) Veröffentlichungstag und Bekanntmachung des Hinweises auf die Patenterteilung: **02.11.2006**
(21) Anmeldenummer: 02011930.1
(22) Anmeldetag: 29.05.2002
(51) Int. Cl.: B60H 1/32, B60H 1/00

(54) **Heiz-/Kühlkreislauf für eine Klimaanlage eines Kraftfahrzeuges, Klimaanlage und Verfahren zur Regelung derselben**
Heating/cooling circuit for an air conditioning of a motor vehicle, air conditioning and its control method
Circuit de chauffage/réfrigération pour un climatiseur de véhicule à moteur, climatiseur et procédé pour sa commande

(30) Priorität: 29.05.2001 DE 10126257
(43) Veröffentlichungstag der Anmeldung: 04.12.2002
(73) Patentinhaber: Behr GmbH & Co. KG, 70469 Stuttgart (DE)
(72) Erfinder: Feuerecker, Günther, Dr., 70567 Stuttgart (DE); Liermann, Andreas, Dipl.-Ing., 67117 Limburgerhof (DE)

(56) Entgegenhaltungen:
- EP-A- 0 681 933
- EP-A- 0 842 799
- EP-A- 0 989 003
- DE-A- 19 725 978
- US-A- 5 769 316
- US-B1- 6 178 761

## Beschreibung

Die Erfindung betrifft einen Heiz-/Kühlkreislauf für ein Kraftfahrzeug gemäß dem Oberbegriff des Anspruchs 1, eine diesen enthaltende Klimaanlage und ein Verfahren zur Regelung der Klimaanlage.

Aus der US 5,782,102 ist ein derartiger Heiz-/Kühlkreislauf für eine Klimaanlage eines Kraftfahrzeuges bekannt, bei der der Verdampfer des Kühlkreislaufes zur Abkühlung einer einem Fahrzeuginnenraum zuzuführenden Luft benötigt wird und der Kondensator des Heiz-/Kühlkreislaufes zur Aufheizung der dem Innenraum zuzuführenden Luft genutzt wird, um die Abwärme des Kühlkreislaufes nicht ungenutzt an die Umgebung abzugeben. Zusätzlich ist ein Außenwärmetauscher vorgesehen, über den das Kältemittel Wärme mit der Außenumgebung austauschen kann. Dieser Außenwärmetauscher dient, wenn die Klimaanlage ausschließlich im Kühlmodus betrieben wird, als Kondensator und wenn die Klimaanlage ausschließlich im Heizmodus betrieben wird, als Verdampfer. Dazu ist dem Außenwärmetauscher ein Expansionsorgan zugeordnet, das als Kapillare mit festem Öffnungsquerschnitt ausgebildet ist. Je nach Bedarf kann mit diesem Heiz-/Kühlkreislauf die dem Fahrzeuginnenraum zugeführte Luft entweder gekühlt, geheizt oder entfeuchtet werden.

Nachteilig an dieser bekannten Klimaanlage ist, daß im Reheat-Betrieb der zusätzliche Außenwärmetauscher kältemittelseitig dem Heizer direkt nachgeschaltet ist und deshalb nur Wärme abgibt. Damit ist die Heizleistung im Verhältnis zur Kühlleistung im wesentlichen festgelegt und es kann gegebenenfalls nicht genügend Heizleistung zur Verfügung stehen.

In der EP 0 989 003 A2 wird ein Kältemittelkreislauf für ein Kraftfahrzeug gemäß dem Oberbegriff des Anspruchs 1 beschrieben, welcher zwischen einem Klimatisierungsbetrieb zur Abkühlung von dem Fahrzeuginnenraum zuzuführender Luft und einem Wärmepumpenbetrieb zur Aufwärmung von dem Fahrzeuginnenraum zuzuführender Luft umgeschaltet werden kann. Um eine Kältemittelansammlung in passiven Teilen des Kältemittelkreislaufs zu vermeiden, wird in der EP 0 989 003 A2 vorgeschlagen, die vorgesehenen Wärmetauscher bei jeder Betriebsweise des Kältemittelkreislaufs im Kreislauf zu belassen. Um im Falle des Klimatisierungsbetriebs eine Wärmeabgabe des in der Heiz-/Klimaanlage befindlichen Wärmepumpenheizkörpers an den durch die Heiz-/Klimaanlage strömenden Luftstrom zu verhindern, sind Klappen vorgesehen, welche den Wärmepumpenheizkörper in dieser Betriebsart abdecken, so dass dieser nicht von Luft durchströmt wird.

In der EP 0 842 799 A2 ist in einem Ausführungsbeispiel eine Wärmepumpe für ein Kraftfahrzeug beschrieben, bei der der Kältemittelkreislauf einen Verdampfer und zwei Kondensatoren, nämlich einen Haupt- und einen Hilfskondensator umfasst. Verdampfer und Hilfskondensator sind im Luftführungskanal einer Heiz-/Klimaanlage zur Temperierung von dem Fahrzeuginnenraum zuzuführender Luft angeordnet. Der Hauptkondensator befindet sich im Motorraum und wird mit Umgebungsluft beaufschlagt. In einem Heizbetrieb wird der Kältemittelkreislauf so geschaltet, dass der außen liegende Hauptkondensator umgangen wird. Um eine übermäßige Kältemittelansammlung im nicht durchströmten Hauptkondensator zu vermeiden, ist zusätzlich eine Absaugleitung, welche zum Kompressorvorlauf führt, vorgesehen. Im Kühlbetrieb werden Haupt- und Hilfskondensator durchströmt, wobei die Hauptwärmeabfuhr über den Hauptkondensator nach außen hin erfolgt.

Ausgehend von diesem Stand der Technik ist es Aufgabe der Erfindung einen verbesserten Heiz-/Kühlkreislauf für eine Klimaanlage eines Kraftfahrzeuges bereitzustellen, die in allen drei Betriebsarten, nämlich Kühlen, Heizen und Reheat optimal arbeitet und insbesondere im Reheat-Betrieb eine effektive, energiesparende und dem Bedarf angepasste Entfeuchtung und anschließende Aufheizung der Luft bewirken kann sowie ein Verfahren zur Regelung der Klimaanlage.

Diese Aufgabe wird gelöst durch einen Gegenstand mit den Merkmalen des Anspruchs 1 sowie eine Klimaanlage mit den Merkmalen des Anspruchs 8.

Erfindungsgemäß ist eine drosselbare Leitung zwischen einer Verbindungsleitung zum Heizwärmetauscher und einer Leitung oder Komponente auf niedrigem Systemdruck vorhanden. Dadurch lässt sich im Reheat-Modus der Wärmeumsatz im Außenwärmetauscher je nach eingestelltem Druck von Wärmeabgabe bis Wärmeaufnahme variieren, so daß das Verhältnis von Kühlleistung des Verdampfers und Heizleistung des Heizwärmetauschers in weiten Grenzen variiert und stufenlos eingestellt werden können. Dadurch kann im Reheat-Betrieb gleichzeitig die Heiz- und Kühlleistung an den momentanen Bedarf optimal angepasst werden, wodurch einerseits eine verbesserte Konditionierung, d.h. Entfeuchtung und Temperierung der Luft realisierbar ist und andererseits Energie und damit letztendlich Kraftstoff eingespart werden kann.

Das erfindungsgemäße Verfahren zeichnet sich dadurch aus, daß im Reheat-Betrieb beide Expansionsorgane von Kältemittel durchströmt werden, wodurch einstellbare Druckverhältnisse in dem Verdampfer und dem Außenwärmetauscher und dem Heizwärmetauscher möglich werden mit den vorgenannten Vorteilen.

Bevorzugt sind die Mittel durch die dem Verdampfer und dem Außenwärmetauscher zugeordneten Expansionsorgane gebildet sind, wobei mindestens eines der Expansionsorgane regelbar ist.

Bevorzugt sind die Expansionsorgane kontinuierlich regelbar, um eine stufenlose Einstellung der Drücke und damit der Wärmeleistungen des Verdampfers und des Außenwärmetauschers realisieren zu können.

Um die Leistungen der Wärmetauscher noch besser an der Bedarf anpassen zu können, ist bevorzugt auch die Kompressorleistung durch Verstellung des Hubvolumens oder der Kompressordrehzahl regelbar.

Bevorzugt wird als Kältemittel für den erfindungsgemäßen Heiz- oder Kühlkreislauf CO₂ eingesetzt, da CO₂ optimal für einen Wärmepumpenbetrieb, wie er mit dem erfindungsgemäßen Kreislauf durchführbar ist, geeignet ist.

Bei Einsatz von CO₂ als Kältemittel ist bevorzugt ein innerer Wärmetauscher zum Austausch von Wärme zwischen einem hochdruckseitigen und einem niederdruckseitigen Abschnitt des Heiz-/Kühlkreislaufs vorgesehen.

Um die Kältemitteldruckverluste innerhalb der Leitungen und Wärmetauscher so gering wie möglich zu halten und im Kühl- bzw. Heizbetriebsmodus den entsprechend den Bedingungen optimalen Betriebspunkt einstellen zu können, ist eine absperrbare Heizbypassleitung zur kältemittelseitigen Umgehung des Heizwärmetauschers und des dem Außenwärmetauscher zugeordneten Expansionsorgans sowie eine absperrbare Kühlbypassleitung zur Umgehung des Verdampfers und des zugeordneten Expansionsorgans vorgesehen. Weiterhin lassen sich so die Komponenten Verdampfer oder Heizwärmetauscher, falls ihre Funktion nicht benötigt wird oder sogar nachteilig wäre, komplett ausschalten.

Damit sich im Kühlbetrieb, wenn ausschließlich der Verdampfer arbeitet und die dem Fahrzeuginnenraum zuzuführende Luft abkühlt, kein Kältemittel in dem Heizwärmetauscher, der durch die vom Verdampfer abgekühlte Luft zwingendermaßen auch abgekühlt wird, da die Luft diesen durchströmt, ansammelt, ist eine drosselbare Leitung zwischen einer mit dem Heizwärmetauscher verbundenen Leitung und einer Leitung auf dem niedrigen Druckniveau des Verdampfers vorgesehen.

Um die Abwärme eines Antriebsaggregates zu nutzen, ist ein weiterer Heizwärmetauscher zur ausschließlichen Erwärmung der Luft vorgesehen, der mit Kühlmittel eines Antriebsagregates in bekannter Weise beaufschlagbar ist.

Dieser weitere Wärmetauscher kann luftseitig vor dem ersten Heizwärmetauscher oder nach diesem angeordnet sein.

Im Folgenden wird die Erfindung anhand eines Ausführungsbeispieles unter Bezugnahme auf die Zeichnung im Einzelnen erläutert. In der Zeichnung zeigen:
- Fig.1: einen erfindungsgemäßen Heiz-/Kühlkreislauf für eine Klimaanlage eines Kraftfahrzeuges im Betriebsmodus Kühlen;
- Fig. 2: eine Darstellung der wesentlichen Zustandsänderungen des Kältemittels im Betriebsmodus Kühlen in einem Druck- Enthalpie - Diagramm;
- Fig.3: einen erfindungsgemäßen Heiz-/Kühlkreislauf für eine Klimaanlage eines Kraftfahrzeuges im Betriebsmodus Heizen;
- Fig. 4: eine Darstellung der wesentlichen Zustandsänderungen des Kältemittels im Betriebsmodus Heizen in einem Druck- Enthalpie - Diagramm;
- Fig.5: einen erfindungsgemäßen Heiz-/Kühlkreislauf für eine Klimaanlage eines Kraftfahrzeuges im Betriebsmodus Reheat;
- Fig. 6 bis 8: Darstellungen der wesentlichen Zustandsänderungen des Kältemittels im Betriebsmodus Reheat in einem Druck-Enthalpie - Diagramm, jeweils bei verschiedenen Drücken des Außenwärmetauschers 22;
- Fig. 9: alternative Ausführung eines erfindungsgemäßen Heiz/Kühlkreislaufes für eine Klimaanlage im Betriebsmodus Heizen;
- Fig. 10: alternative Ausführung eines erfindungsgemäßen Heiz/Kühlkreislaufes für eine Klimaanlage im Betriebsmodus Kühlen;
- Fig.11: alternative Ausführung eines erfindungsgemäßen Heiz/Kühlkreislaufes für eine Klimaanlage im Betriebsmodus Heizen;
- Fig. 12: alternative Ausführung eines erfindungsgemäßen Heiz/Kühlkreislaufes für eine Klimaanlage im Betriebsmodus Reheat;
- Fig. 13: eine erste Ausführung eines erfindungsgemäßen Heiz/Kühlkreislaufes für eine Klimaanlage mit einem Abtaumodus;
- Fig. 14: eine zweite Ausführung eines erfindungsgemäßen Heiz/Kühlkreislaufes für eine Klimaanlage mit einem Abtaumodus;
- Fig. 15a: schematische Darstellung von Regelungsparametern für den Kompressor 24;
- Fig. 15b: schematische Darstellung von Stellparametern für das Expansionsorgan 130 bzw. 30.

Ein erfindungsgemäßer Heiz-/Kühlkreislauf 10 für eine Klimaanlage eines Kraftfahrzeuges weist einen in einem Klimagerät 12, das in der Regel in einer Armaturentafel des Kraftfahrzeuges angeordnet ist, angeordneten Verdampfer 14 und einen luftseitig dem Verdampfer 14 nachgeordneten Heizwärmetauscher 16 auf. Über ein Gebläse 18 kann Umluft oder Frischluft durch das Klimagerät 12 gefördert werden, wobei die Luft im Verdampfer 14 abkühlt und um Heizwärmetauscher 16 erwärmt werden kann. Optional ist luftseitig nach dem Heizwärmetauscher 16 ein weiterer Heizwärmetauscher 20 angeordnet, der über Kühlmittelleitungen K₁ und K₂ mit einem Antriebsagregrat des Kraftfahrzeuges verbunden ist, so daß heißes Kühlmittel den Heizwärmetauscher durchströmen kann. Die im Klimagerät 12 temperierte Luft kann über geeignete Ausströmer dem Fahrzeuginnenraum zugeführt werden.

Neben dem Verdampfer 14 und dem Heizwärmetauscher 16 weist der Heiz-/Kühlkreislauf 10 einen Außenwärmetauscher 22 und einen Kompressor 24 auf. Diese wesentlichen Komponenten des Heiz-/Kühlkreislaufes sind über Kältemittelleitungen L₁ bis L₁₀ in unten beschriebener Weise miteinander verbunden. Eingangsseitig des Kompressors 24 ist in der Leitung L₇ ein Kältemittelsammler 26 vorgesehen.

Dem Verdampfer 14 ist eingangsseitig ein erstes Expansionsorgan 28 zugeordnet und dem Außenwärmetauscher 22 ist eingangsseitig ein weiteres Expansionsorgan 30 zugeordnet. Beide Expansionsorgane 28 und 30 sind regelbar, bevorzugt kontinuierlich regelbar. Des weiteren sind Ventile 32, 34, 36, 38 vorgesehen, deren Funktionen weiter unten beschrieben werden.

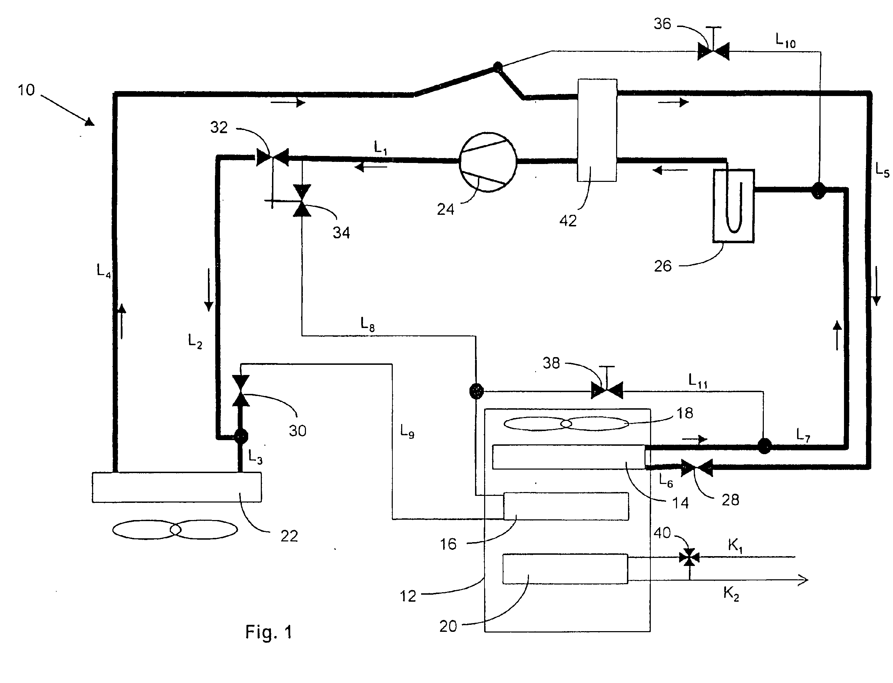

Im Kühlmodus (Fig. 1), wenn also die dem Fahrzeuginnenraum zuzuführende Luft ausschließlich gekühlt werden soll, ist der Heiz-/Kühlreislauf 10 wie folgt verschaltet:

Ausgehend vom Kompressor 24 wird das Kältemittel über die Leitungen L₁, L₂ und L₃ dem Außenwärmetauscher 22 zugeführt, dazu ist das Ventil 32 geöffnet und das Ventil 34 geschlossen. Im Außenwärmetauscher 22 wird das als Heißgas vorliegende Kältemittel abgekühlt. Vom Außenwärmetauscher 22 strömt das Kältemittel über die Leitungen L₄ und L₅ zum Expansionsorgan 28. Bei Durchströmen des Expansionsorgan 28 entspannt das Kältemittel und wird über die Leitung L₆ dem Verdampfer 14, in dem das Kältemittel verdampft und somit der zu kühlenden Luft Wärme entzieht, zugeführt. Über eine Leitung L₇ wird das Kältemittel über den Kältemittelsammler 26 zurück zum Kompressor 24 geführt.

Im Kühlbetrieb ist der Heizwärmetauscher 16 nicht im Betrieb, und das Kältemittel wird über die Leitung L₂ an diesem und dem zweiten Expansionsorgan 30 vorbeigeführt, so daß die Leitung L₂ als Heizbypassleitung eingesetzt ist.

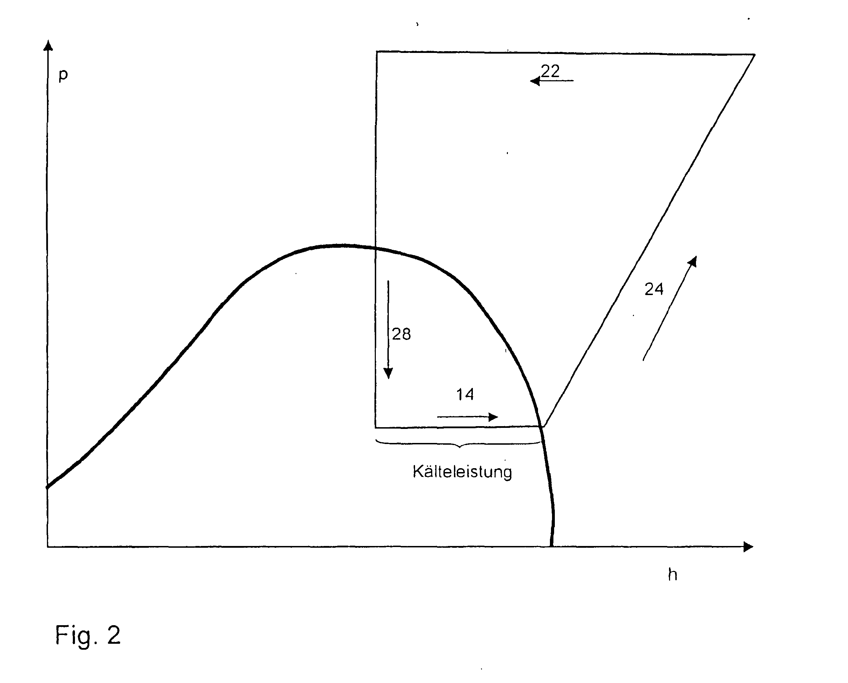

In Fig.2 sind die Zustandsänderungen des Kältemittels, in diesem Fall CO₂, für den einfachsten Fall idealisiert dargestellt. Die Nummern entsprechen den Komponenten, in denen die Zustandsänderungen stattfinden.

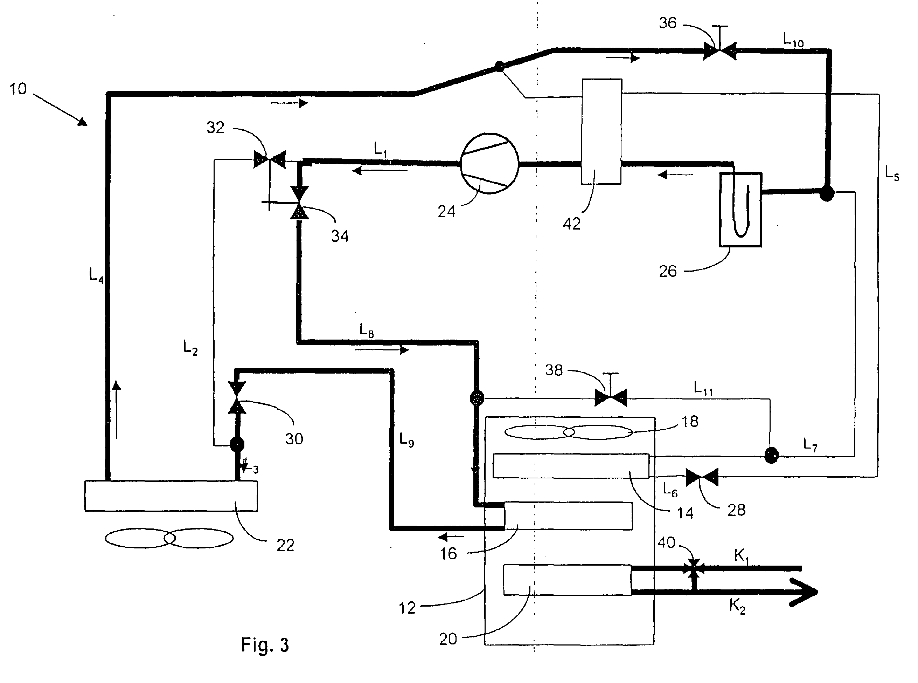

Im Heizmodus (Fig. 3), wenn die dem Fahrzeuginnenraum zuzuführende Luft ausschließlich aufgeheizt werden soll, ist der Verdampfer 14 außer Betrieb und der Heizwärmetauscher 16 in Betrieb. Der Heiz-/Kühlkreislauf 10 arbeitet dann als Wärmepumpe. Das Kältemittel wird vom Kompressor 24 über die Leitungen L₁ und L₈ als Heißgas dem Heizwärmetauscher 16 zugeführt, in dem das Kältemittel Wärme abgibt und dabei die Zuluft aufheizt. Das Kältemittel wird über eine Leitung L₉ dem zweiten Expansionsorgan 30 zugeführt und dort entspannt. Über eine Leitung L₃ wird das Kältemittel dem Außenwärmetauscher 22 zugeführt, der jetzt als Verdampfer betreibbar ist, in dem das Kältemittel verdampft und der Außenluft Wärme entzieht. Über Leitungen L₄, L₁₀ sowie L₇ wird das Kältemittel wieder dem Kompressor 24 zugeführt. Die Leitung L₁₀, die über ein Ventil 36 absperrbar ist, dient in dem Heizmodus als Kühlbypassleitung zur kältemittelseitigen Umgehung des Verdampfers 14.

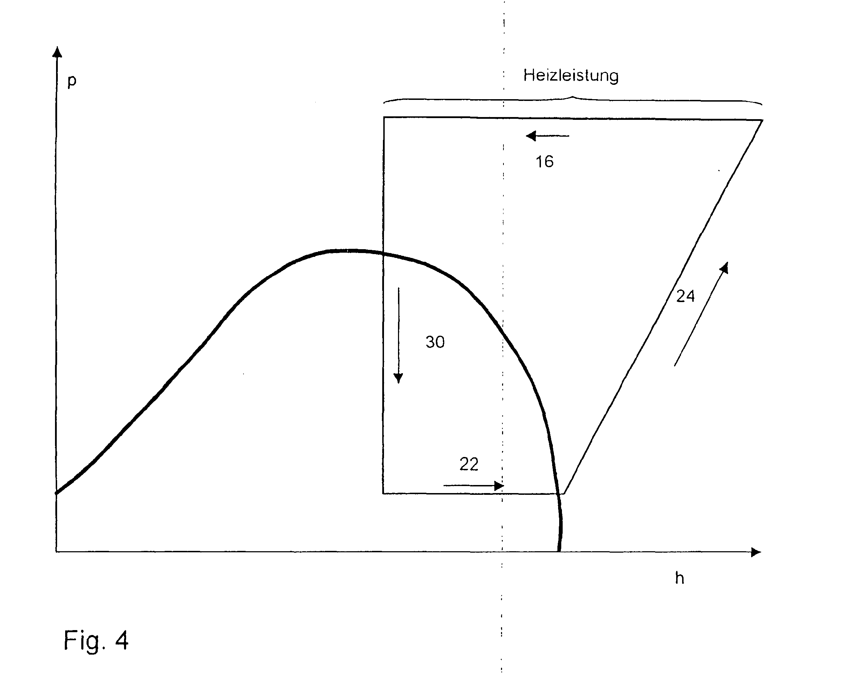

In Fig. 4 sind die Zustandsänderungen des Kältemittels, in diesem Fall CO₂, für den einfachsten Fall idealisiert dargestellt. Die Nummern entsprechen den Komponenten, in denen die Zustandsänderungen stattfinden.

Zusätzlich kann im Heizbetrieb der weitere Heizwärmetauscher 20 betrieben werden, indem ein Heizungsventil 40 entsprechend geöffnet wird, so daß heißes Kühlmittel von dem Antriebsagregat zum Heizwärmetauscher 20 strömen kann.

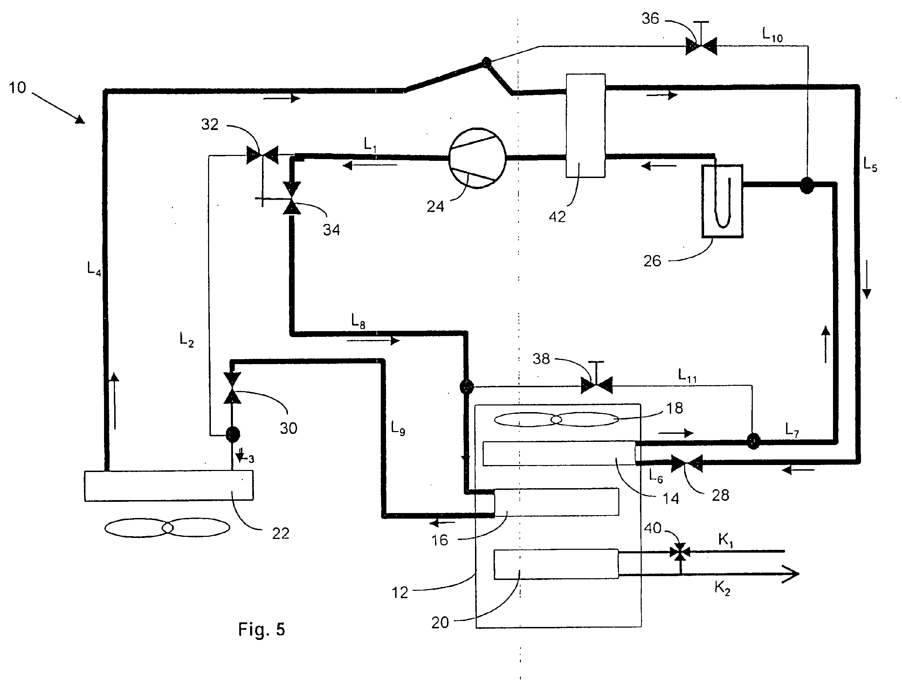

Im Reheat-Betrieb (Fig. 5), der zum Entfeuchten und Erwärmen der dem Fahrzeuginnenraum zuzuführenden Luft dient, sind sowohl der Verdampfer 14 als auch der Heizwärmetauscher 16 in Betrieb, so daß die Luft zunächst im Verdampfer 14 abkühlen kann und die in der Luft enthaltene Feuchtigkeit auskondensieren kann. Bevor die Luft dem Fahrzeuginnenraum zugeführt wird, kann sie im Heizwärmetauscher 16 und optional auch in dem weiteren Heizwärmetauscher 20 wieder erwärmt werden.

Das Kältemittel wird im Reheat-Betrieb ausgehend vom Kompressor 24 über die Leitungen L₁ und L₈ dem Heizwärmetauscher 16 zugeführt, so daß im Heizwärmetauscher 16 das Kältemittel Wärme an die Luft abgeben kann. Über die Leitung L₉ wird das Kältemittel zum Expansionsorgan 30 geführt. Dieses kann es je nach dessen Einstellung ohne wesentlichen Druckverlust passieren, oder aber auf einen vorteilhaften Druck gedrosselt werden. Über L₃ wird das Kältemittel zum Außenwärmetauscher 22 geführt und von dort über Leitungen L₄, L₅ dem Expansionsorgan 28 und über L₆ dem Verdampfer 14 zugeführt. Vom Verdampfer 14 wird das Kältemittel über die Leitungen L₇ wieder zum Kompressor zurückgeführt.

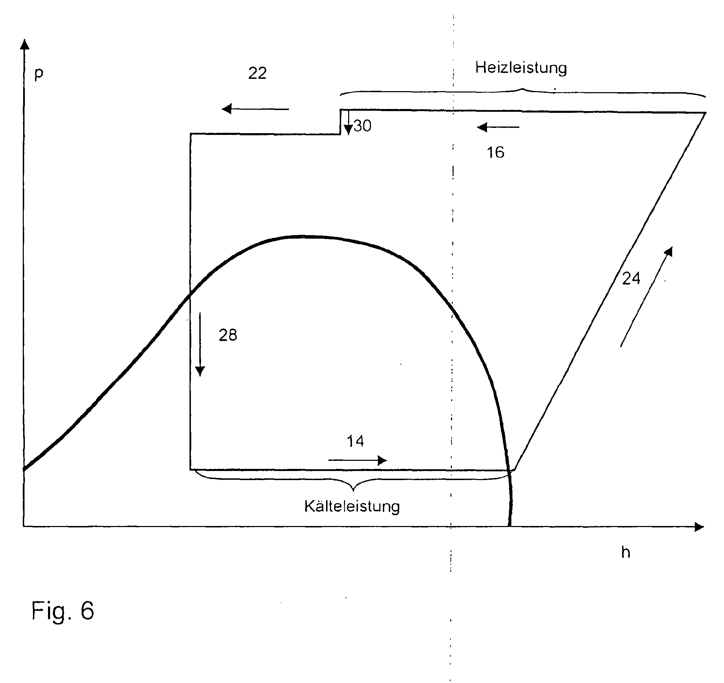

Je nach Feuchtigkeitsgehalt und Temperatur der Luft wird zur gewünschten Entfeuchtung eine bestimmte Kühlleistung am Verdampfer 14 benötigt. Weiterhin wird abhängig davon ob der Innenraum eines Fahrzeugs zu Fahrtbeginn noch kalt ist oder sich bereits während der Fahrt aufgeheizt hat eine sehr unterschiedliche Heizleistung zur anschließenden Erwärmung der Luft auf ein komfortables Niveau benötigt. Durch Variation der Expansionsorgane 28, 30 läßt sich der Druck im Außenwärmeübertrager 22 idealerweise zwischen dem Druck am Verdampfer 14 und dem Hochdruck am Heizwärmetauscher 16 einstellen, wobei zu beachten ist, daß auch der Hochdruck am Heizwärmetauscher neben dem Fördervolumen des Kompressors 24 insbesondere von der Stellung der Expansionsorgane 28 und 30 abhängig und auf einen für die entsprechenden Rahmenbedingungen vorteilhaften Wert eingestellt werden muß. Die Expansionsorgane 28 und 30 können deshalb nicht unabhängig voneinander eingestellt werden. Ist der Druck im Außenwärmetauscher 22 hoch, wie in dem Zustandsdiagramm der Fig. 6 dargestellt, das heißt ist das Expansionsorgan 30 weit geöffnet und das Expansionsorgan 28 weit geschlossen, so gibt der Außenwärmetauscher 22 Wärme ab und das Verhältnis zwischen der Heizleistung des Wärmetauschers 16 und der Kühlleistung des Verdampfers 14 ist klein. Eine solche Einstellung ist also vorteilhaft bei kleinem Heizbedarf.

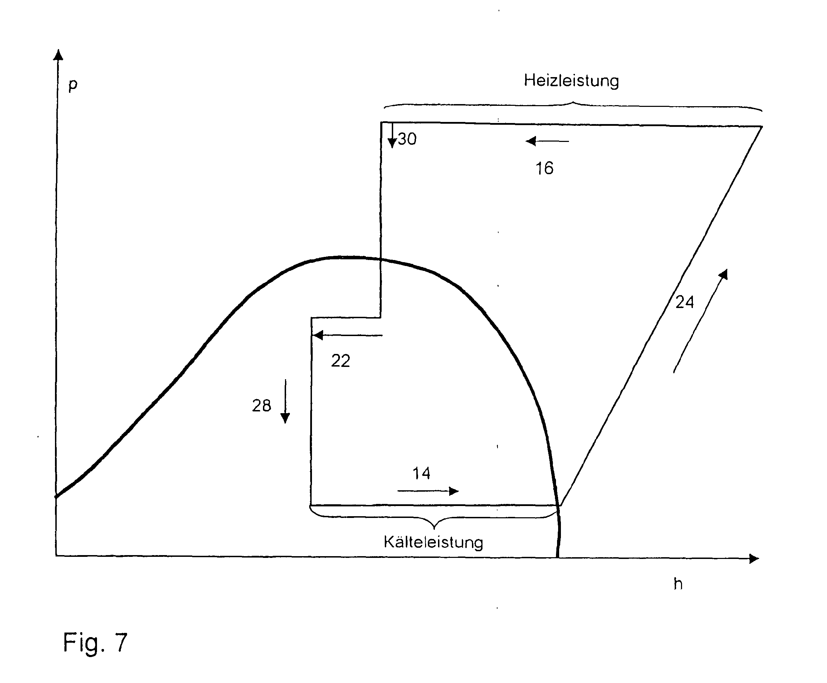

Wird dagegen das Expansionsorgan 30 zunehmend geschlossen und das Expansionsorgan 28 zunehmend geöffnet, so wird der Druck im Außenwärmetauscher 22 immer kleiner und die abgegebene Wärmeleistung des Außenwärmetauschers 22 sinkt. Dies hat eine sinkende spezifische Kälteleistung im Verdampfer 14 zur Folge. Damit steigt das Verhältnis von Heizleistung im Heizwärmetauscher 16 und Kälteleistung im Verdampfer 14. Dies ist in Fig. 7 dargestellt.

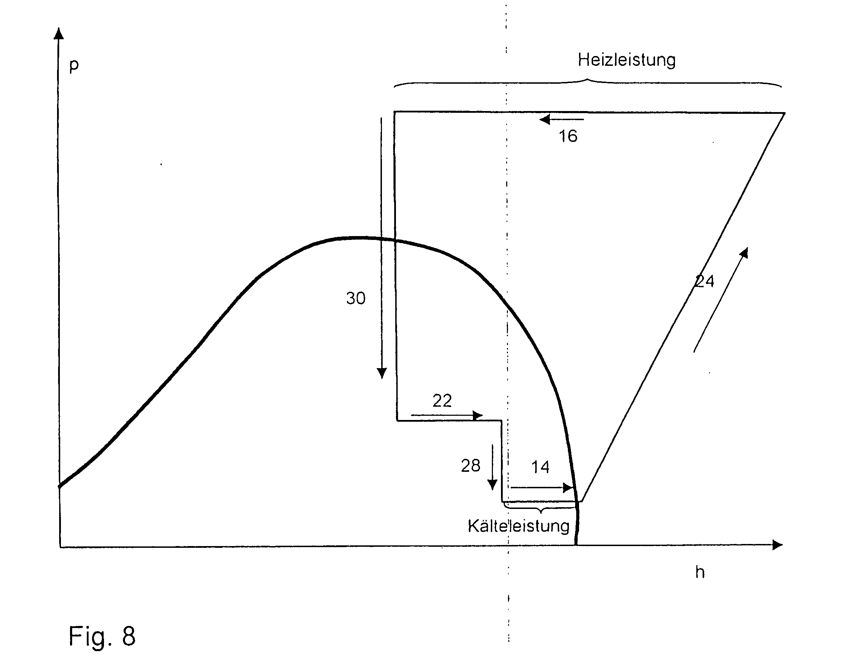

Wenn der Druck im Außenwärmetauscher 22 so klein wird, dass die ihm zugeordnete Siedetemperatur des Kältemittels die Temperatur der außen anliegenden Luft unterschreitet, so wirkt der Außenwärmetauscher 22 jetzt als Verdampfer und nimmt Wärme aus der Umgebung auf, wie in Fig. 8 dargestellt. Dies führt zu einer weiteren Verkleinerung der spezifischen Kälteleistung im Verdampfer 14.

Das Verhältnis von Heizleistung im Heizwärmetauscher 16 und Kälteleistung im Verdampfer 14 steigt also mit sinkendem Druck im Außenwärmetauscher 22.

Um das Kühl- und Heizleistungsangebot an den aktuellen Bedarf anzupassen, müssen die Expansionsorgane 28 und 30 so eingestellt werden, daß sich zum einen ein für die Gesamtleistung vorteilhafter Hochdruck am Heizwärmetauscher 16 einstellt und gleichzeitig ein für das Verhältnis von Kühl- und Heizleistung passendes Druckniveau im Außenwärmetauscher 22 herrscht. Die Gesamtleistung kann über das Fördervolumen des Kompressors 24 oder auch in gewissen Grenzen über die Wahl des Druckniveaus im Heizwärmetauscher 16 eingestellt werden.

Bevorzugt ist das zweite Expansionsorgan 30 absperrbar, so daß im Kühlbetrieb kein Kältemittel von der Leitung L₃ in die Leitung L₉ und damit in den Heizwärmetauscher 16 gelangen kann. Alternativ kann diese Absperrung durch ein vor oder nach dem Expansionsorgan 30 angeordnetes Rückschlagventil oder eine Rückschlagklappe erfolgen.

Bevorzugt ist auch das erste Expansionsorgan 28 absperrbar, so daß im Heizbetrieb kein Kältemittel unter hohem Druck von der Leitung L₅ in die Leitung L₆ und damit in den Verdampfer 14 gelangen kann.

Wenn im Kühlmodus ausschließlich der Verdampfer 14 in Betrieb ist, wird die im Verdampfer 14 abgekühlte Luft den luftseitig nachgeordneten Heizwärmetauscher 16 abkühlen, wodurch es vorkommen kann, daß sich im Laufe der Zeit im Heizwärmetauscher 16 und den Kältemittelleitungen L₈ und L₉ Kältemittel ansammelt, das dann im restlichen Kreislauf fehlt. Um diese Ansammlung zu vermeiden, ist eine über eine Drossel 38 drosselbare Leitung L₁₁ vorgesehen, die eine Verbindung herstellt zwischen einer mit dem Heizwärmetauscher 16 verbundenen Leitung, vorzugsweise der Zulaufleitung L₈ und einer Leitung oder Komponente, die sich auf niedrigem Systemdruck, d.h. zwischen Expansionsorgan 28 und Eintritt des Kompressors 24 - befindet. Im dargestellten Ausführungsbeispiel ist dies die Rücklaufleitung L₇ des Verdampfers 14. Diese Drossel 38 kann durch ein Ventil, eine Engstelle in der Leitung L₁₁ oder Kapillare, einen porösen Körper oder ähnliches dargestellt werden.

Bevorzugt wird als Kältemittel CO₂ eingesetzt, da CO₂ gute thermodynamische Eigenschaften aufweist, die es für einen Wärmepumpenbetrieb geeignet machen. Bei Einsatz von CO₂ ist zur Leistungserhöhung ein innerer Wärmetauscher 42 vorgesehen, der einen Wärmetausch zwischen einem hochdruckseitigen Abschnitt (Leitung L₅) und einem niederdruckseitigen Abschnitt (Leitung L₇) bewirkt.

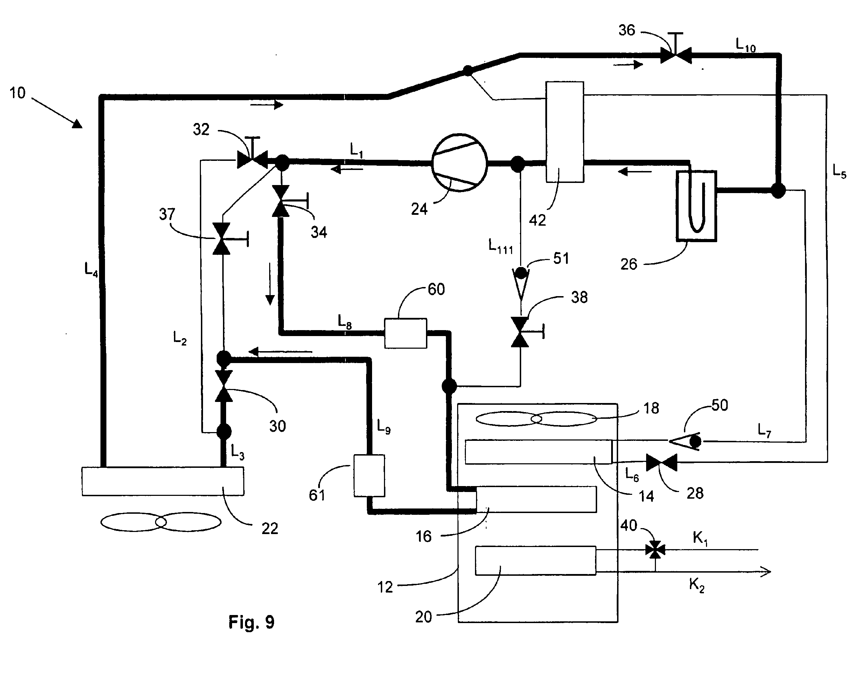

Fig. 9 zeigt eine alternative Ausführung des erfindungsgemäßen Heiz/Kühlkreislaufes mit zwei Pufferbehältern 60, 61 und einer alternativen Ausführung der Verbindung zwischen der Zulaufleitung L₈ des Heizwärmetauschers 16 und einer Leitung oder Komponente, die sich auf niedrigem Systemdruck, d.h. zwischen Expansionsorgan 28 und Eintritt des Kompressors 24 befindet. Im dargestellten Ausführungsbeispiel verbindet die Leitung L₁₁₁ mit einer Drossel 38 und einem Rückschlagventil 51 die Zulaufleitung L₈ mit der Saugleitung zwischen Kältemittelsammler 26 und Kompressor 24. Die Drossel 38 kann durch ein Ventil, eine Engstelle in der Leitung L₁₁₁ oder Kapillare, einen porösen Körper oder ähnliches realisiert werden. Durch die Verwendung der Drossel 38 wird nur ein kleiner Teilstrom abgezweigt, und damit die Leistungseinbuße im Heizbetrieb klein gehalten.

Durch die dargestellte Positionierung der Leitung L₁₁₁ zwischen dem Kältemittelsammler 26 und Eintritt des Kompressors 24, vorzugsweise zwischen Austritt des inneren Wärmtauschers 42 und Eintritt des Kompressors 24, wird die spezifische Enthalpie des Sauggases erhöht, wodurch die Temperatur des Heißgases am Austritt des Kompressors 24 ansteigt und die durch die Abzweigung eines Teils des Kältemittels vor Eintritt in den Heizwärmtauscher 16 hervorgerufene Leistungseinbuße, je nach Betriebszustand teilweise kompensiert oder sogar überkompensiert wird. Außerdem minimiert die Leitung L₁₁₁ die Kältemittelverlagerung zwischen den Betriebszuständen Heizen und Kühlen. Zusätzlich erhöht die Leitung L₁₁₁ die Betriebssicherheit, da unzulässig hohe Stillstandsdrücke vermieden werden, welche durch eine Einsperrung von Kältemittel zwischen dem Ventil 34 und dem Expansionsorgan 30 entstehen können.

Durch den Einbau des Rückschlagventils 51 wird ein Rückwärtsströmen des Kältemittels vom Kältemittelsammler 26 zum Heizwärmetauschers 16 bei einer Leckage im Heizwärmetauschers 16 vermieden. Zudem ermöglicht das Rückschlagventil 51 zusammen mit der Schließung der Ventile 34 und 30 eine vollständige Abschottung des Heizwärmetauschers 16.

Bei einer besonders vorteilhaften Ausführung, ist die Drossel 38 und das Rückschlagventil 51 zu einer Baugruppe zusammengefaßt, wodurch Kostenvorteile entstehen und weniger Verbindungsstellen benötigt werden.

Die dargestellten Pufferbehälter 60, 61 werden in vorteilhafter Weise zur Kompensation des unterschiedlichen Kältemittelbedarfs bei den unterschiedlichen Betriebsarten verwendet. Im Wärmepumpenbetrieb (Heizbetrieb) wird weniger Kältemittel benötigt als im Kühlbetrieb. Die Massendifferenz muß im Kältemittelsammler 26 gepuffert werden, der damit im Wärmepumpenbetrieb stärker befüllt ist. Bei den üblichen Kältemittelsammlern 26 besteht das austretende Kältemittel aus gesättigtem Dampf und einem kleinen Flüssigkeitsanteil, wobei der Flüssigkeitsanteil mit steigendem Flüssigkeitsfüllstand im Kältemittelsammler 26 zunimmt. Bei der hier dargestellten Wärmepumpe nimmt die Leistung und der Wirkungsgrad mit steigendem Flüssigkeitsanteil in der Leitung nach dem Kältemittelsammler 26 ab. Deshalb ist eine Reduzierung des Flüssigkeitsgehalts am Austritt des Kältemittelsammlers 26 anzustreben. Dies kann durch eine entsprechende Ausführung des Kältemittelsammlers 26 oder auch durch eine Reduzierung des Kältemittelinhalts im Kältemittelsammler 26, welcher beispielsweise als Niederdrucksammler ausgeführt ist, erreicht werden. Eine Reduzierung des Kältemittelinhaltes im Kältemittelsammler 26 wird in vorteilhafterweise durch mindestens einen Pufferbehälter 60, 61 erreicht, der zwischen den Ventilen 34 und 30 angeordnet ist. Im Wärmepumpenbetrieb befindet sich dann ein Teil des überschüssigen Kältemittels in einem der Pufferbehälter 60, 61 und nicht im Kältemittelsammler 26, so dass der Kältemittelsammler 26 weniger gefüllt ist, und deshalb einen entsprechend kleineren Flüssigkeitsanteil am Austritt aufweist. Der mindestens eine Pufferbehälter 60, 61 kann in der Zulaufleitung L₈ des Heizwärmetauschers 16 und/oder in der Leitung L₉ nach dem Heizwärmetauscher 16 angeordnet sein. Die Anordnung eines Pufferbehälters 61 in der Leitung L₉ hat den Vorteil, dass der Pufferbehälter 61, durch die an dieser Stelle höchste Dichte des Kältemittels im Kreislauf, klein ausgeführt werden kann. Die Anordnung eines Pufferbehälters 60 in der Zulaufleitung L₈ hat den Vorteil, dass der Pufferbehälter 60 mit einem Schalldämpfer kombiniert werden kann, wodurch das Pulsen am Kompressoraustritt und damit das Kompressorgeräusch im Heizwärmetauscher 16 gedämpft wird. Das dargestellte Ausführungsbeispiel, zeigt eine Anordnung mit einem Pufferbehälter 60, 61 sowohl in der Zulaufleitung L₈ als auch in der Leitung L₉.

Durch das Ventil 36 in der Kühlbypassleitung L₁₀ wird im Heizbetrieb sowohl der Verdampfer 14 mit Expansionsventil 28, als auch die Hochdruckseite des inneren Wärmeübertragers 42 überbrückt. Damit wird der Druckverlust über den inneren Wärmeübertrager 42 vermieden, wobei der Druckverlust mehrere bar betragen kann.

Bei den bisher dargestellten Ausführungsbeispielen ist der innere Wärmeübertrager 42 im Heizbetrieb (Wärmepumpenbetrieb) nicht aktiv. Dies hat den Vorteil, dass die Heissgastemperaturen unter 100°C liegen, wodurch die thermische Materialbeanspruchung verringert wird. Grundsätzlich hängt die Leistung im Wärmepumpenbetrieb vom Hochdruck im System und vom Massenstrom im System ab. Ein großer Wert für den Hochdruck führt zu hohen Heissgastemperaturen und damit zu einer hohen Leistung. Der Massenstrom beeinflußt die Verhältnisse der Wärmekapazitätsströme am Heizwärmeübertrager 16 und auf diese Weise die Leistung. Bei Teillast ist es daher möglich, eine gewünschte Leistung durch eine Kombination von Hochdruck und Massenstrom zu wählen, wobei der Hochdruck und der Massenstrom in gewissen Grenzen frei wählbar sind, jedoch funktionell zusammenhängen. Die gleiche Leistung kann beispielsweise durch eine hohe Heissgastemperatur und einen geringen Massenstrom bzw. durch eine geringe Heissgastemperatur und einen hohen Massenstrom erreicht werden.

Je nach Bedarf wird man daher entweder einen hohen Massenstrom oder einen geringen Massenstrom wählen, wobei ein hoher Massenstrom eine höhere Kompressor- und Motorbelastung und damit eine schnellere Motoraufwärmung zur Folge hat und ein geringer Massenstrom einen hohen Wirkungsgrad und damit einen geringen Energieverbrauch zur Folge hat. Allerdings sind wie erwähnt Massenstrom und Hochdruck nur in gewissen Grenzen wählbar. Als begrenzende Faktoren sind hier die Leistungsfähigkeit des Kompressors 24 und der Stellbereich des Expansionsorgans 30 (hoher Massenstrom bei niedrigem Hochdruck), der maximale Hochdruck selbst sowie die Regelstabilität des Kompressors 24 (kleiner Massenstrom bei großem Hochdruck) zu erwähnen.

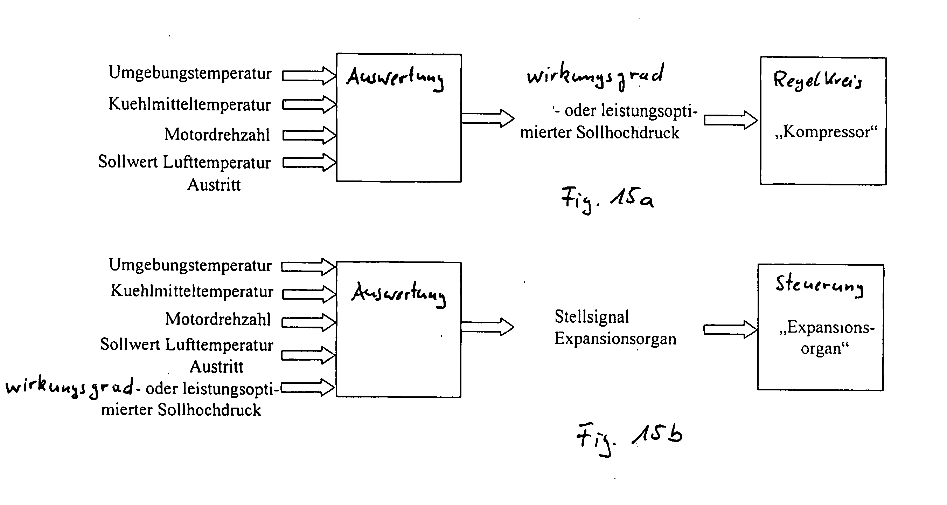

Bei einer vorteilhaften Ausführungsform wird die Leistungsregelung über den Hochdruck im System eingestellt, wobei der Hochdruck beispielsweise durch eine Variation des Kompressorhubs eingestellt wird. Dabei wird in Abhängigkeit von der Umgebungstemperatur, der Kühlmitteltemperatur, der Solltemperatur am Luftaustritt und der Motordrehzahl ein über die Variation des Kompressorhubs einzuregelnder wirkungsgradoptimaler oder ein leistungsoptimaler Sollhochdruck des Kältemittels vorgegeben (siehe Fig. 15a). Die Verstellung des Expansionsorgans 30, 130 erfolgt als reine Steuerung in direkter Abhängigkeit vom generierten Hochdruck-Sollwert des Kältemittels, der Umgebungstemperatur, der Kältemitteltemperatur, der Solltemperatur am Luftaustritt und der Motordrehzahl (siehe Fig. 15b).

In einer weiteren Ausführungsform ist das Expansionsorgan 30, 130 nicht aktiv verstellbar ausgeführt. Die Leistungsregelung erfolgt dann nur durch ein Variieren der Kompressorleistung (siehe Fig. 15a), beispielsweise über den Kompressorhub.

Für den Reheat-Betrieb ist bei einer weiteren alternativen Ausführungsform dem Expansionsorgane 28 ein nicht dargestelltes Schaltventil parallelgeschaltet, wobei das Schaltventil im Reheat-Betrieb offen ist und praktisch keinen Druckabfall erzeugt. Wenn im Reheat-Betrieb zwischen dem Austritt des äußeren Wärmeübertragers 22 und dem Eintritt in den Verdampfer 14 kein Druckabfall vorhanden ist, ist die Verdampfungstemperatur im Verdampfer 14 für eine effektive Entfeuchtung zu hoch, wobei die Verdampfungstemperatur dann in etwa der Temperatur im Außenwärmeübertrager 22 entspricht. Der für den Reheat-Betrieb erforderliche Druckabfall muss daher von der Hochdruckseite des inneren Wärmeübertragers 42 erzeugt werden, wobei ein typischer Wert für den Druckabfall 6 bar bei 10°C Außentemperatur beträgt. Durch diese Maßnahme kann ein einfacheres Expansionsorgan 28 mit einem kleineren Verstellbereich benutzt werden. Zudem ergibt sich ein geringerer Regelungsaufwand.

Die bisher dargestellte Wärmepumpenschaltung reagiert empfindlich auf den Flüssigkeitsgehalt des Sauggases und ist damit wie geschildert sensibel auf Kältemittelverlagerungen im System. Ein Anstieg des Flüssigkeitsgehalts im Sauggas führt zu einem Abfall der Heizleistung und des Wirkungsgrades. Als Verbesserung wurden beim Ausführungsbeispiel nach Fig. 9 Pufferbehälter 60, 61 eingesetzt.

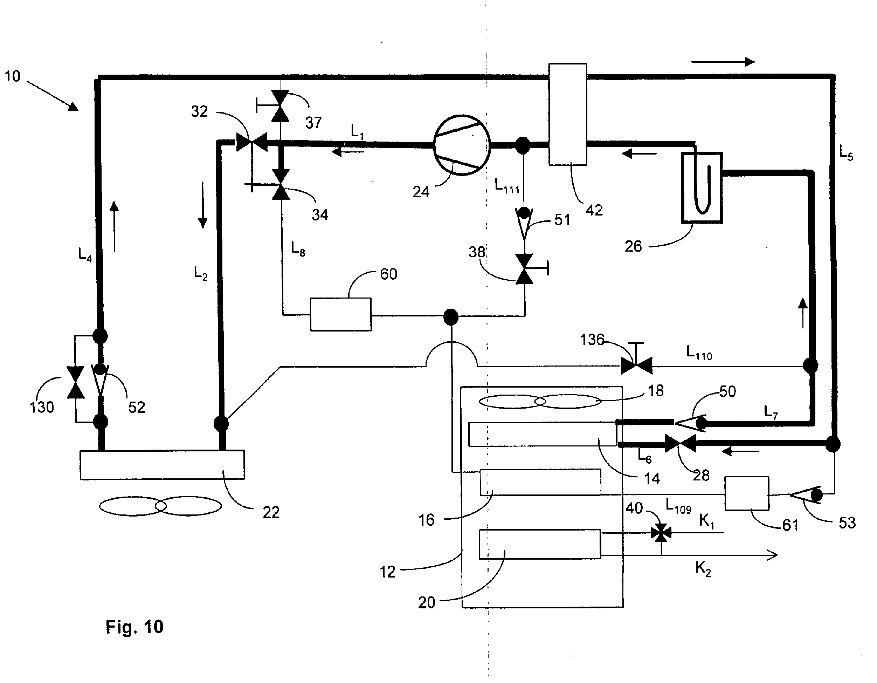

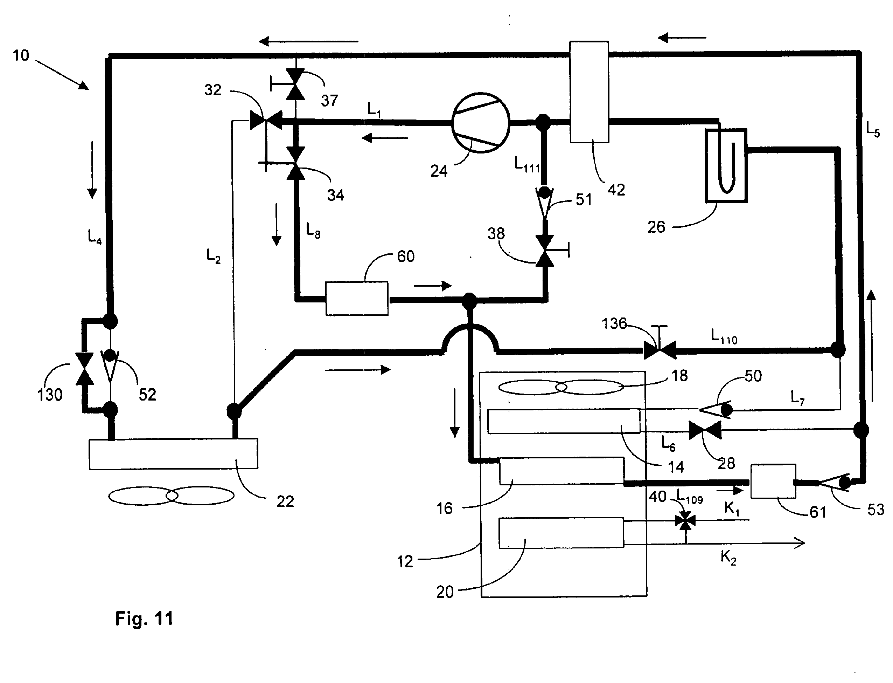

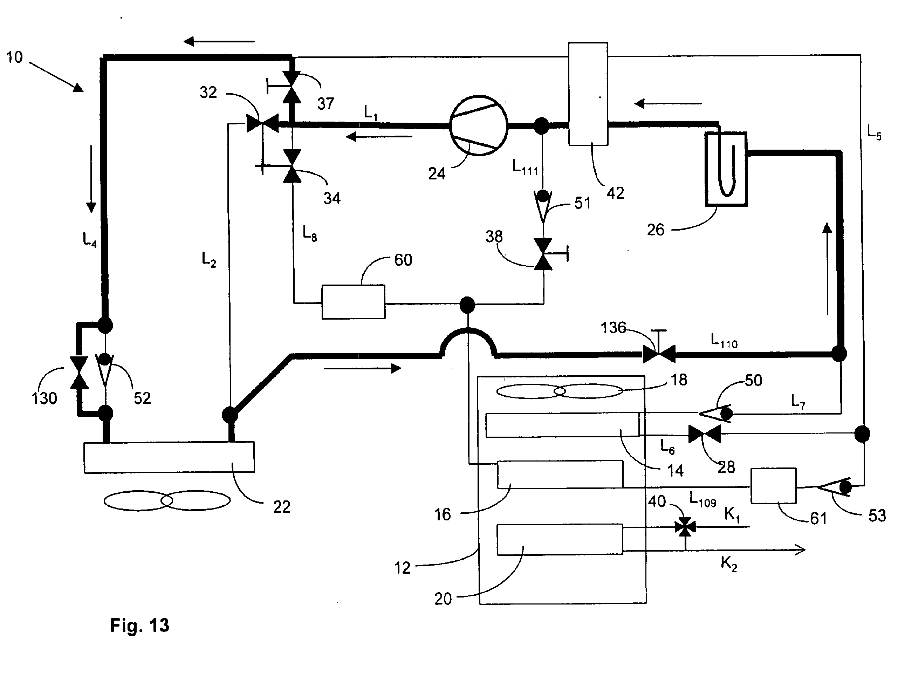

Eine weitere Verbesserungsmöglichkeit zeigen die Fig. 10, 11, 12. Dort ist eine Verschaltung des Kältemittelkreislaufs dargestellt, bei welcher der innere Wärmeübertrager 42 auch im Wärmepumpenbetrieb (Heizbetrieb) aktiv ist. So zeigt die Fig. 10 eine Verschaltung für einen Kühlbetrieb, die Fig. 11 eine Verschaltung für einen Heizbetrieb und Fig. 13 eine Verschaltung für einen Reheat-Betrieb.

Das Expansionsorgan 30 für den äußeren Wärmetauscher 22 befindet sich im Ausführungsbeispiel nach Fig. 10 an einer anderen Stelle und ist als 130 bezeichnet. Im Kühlbetrieb strömt das Kältemittel vom Kompressor durch das geöffnete Ventil 32 ( Ventil 34 ist geschlossen) zum als Gaskühler arbeitenden Außenwärmeübertrager 22, wo es seine Wärme an die Umgebung abgibt. Ventil 136 ist dabei geschlossen. Parallel zum Expansionsventil 130 ist ein Rückschlagventil 52 vorgesehen, weiches in die Durchströmungsrichtung vom Außenwärmeübertrager 22 zum inneren Wärmeübertrager 42 öffnet, so daß das Kältemittel ungehindert am Expansionsventil 130 vorbeiströmen kann. Das Kältemittel strömt durch den inneren Wärmeübertrager 42 in dem es durch einen Wärmeaustausch mit dem Sauggas weiter abgekühlt und dann im Expansionsorgan 28 gedrosselt und anschließend im Verdampfer 14 verdampft wird, wobei es der Zuluft Wärme entzieht. Anschließend strömt es in den Kältemittelsammler 26 und von dort zum inneren Wärmeübertrager 42, wo es erwärmt und dann in den Kompressor 24 geleitet wird. Der Heizwärmetauscher 16 wird im Kühlbetrieb durch die Leitung L₁₁₁, die durch das Ventil 38 kontinuierlich gedrosselt oder auch geschaltet ist, auf niedrigem Systemdruck gehalten und somit wird eine Kältemittelansammlung vermieden. Durch die Rückschlagventile 51 und 53 wird verhindert, dass im Fall einer Leckage des Heizwärmetauschers 16 Kältemittel aus dem übrigen Kreislauf zum Heizwärmetauscher 16 strömt.

Im Heizbetrieb (siehe Fig. 11) strömt das Kältemittel durch das Ventil 34 (Ventile 32 und 37 sind geschlossen) zum Heizwärmetauscher 16, wo es die Zuluft erwärmt. Von dort strömt es durch den inneren Wärmeübertrager 42, der jetzt auf der Hochdruckseite in anderer Richtung durchströmt wird als im Kühlbetrieb. Das Rückschlagventil 52 ist in der vorgegebenen Strömungsrichtung geschlossen, so daß das Kältemittel durch das Expansionsorgan 130 auf niedrigen Druck gedrosselt und im Außenwärmeübertrager 22 unter Wärmeaufnahme aus der Umgebung verdampft wird. Auch der Außenwärmeübertrager 22 wird im Heizbetrieb in anderer Richtung durchströmt als im Kühlbetrieb. Das Sauggas strömt durch das Ventil 136 über die Leitung L₁₁₀ zum Kältemittelsammler 26 und von dort durch den Inneren Wärmeübertrager 42, wo es erwärmt und vorzugsweise vollständig verdampft oder sogar überhitzt wird. Vom inneren Wärmeübertrager 42 strömt es in den Kompressor 24 und wird dort auf einen höheren Druck verdichtet. Das Expansionsventil 28 ist geschlossen und der Verdampfer 14 wird damit nicht durchströmt und ist außer Funktion. Falls die Leitung L₁₁₁ durch das Organ 38 kontinuierlich gedrosselt ist, ist auch hier die Positionierung des niederdruckseitigen Endes der Leitung L₁₁₁ zwischen innerem Wärmeübertrager 42 und Kompressor 24 optimal, um die Leistungseinbuße durch diesen Teilstrom zu minimieren. Der Teilstrom ist dabei möglichst klein zu wählen. Falls durch die dargestellte Positionierung der Leitung L₁₁₁ unvertretbar hohe Heissgastemperaturen auftreten, kann das niederdruckseitige Ende der Leitung L₁₁₁ alternativ auch zwischen dem Kältemittelsammler 26 und dem inneren Wärmtauscher 42 oder auch zwischen dem Expansionsorgan 28 und dem Kältemittelsammler 26 positioniert werden.

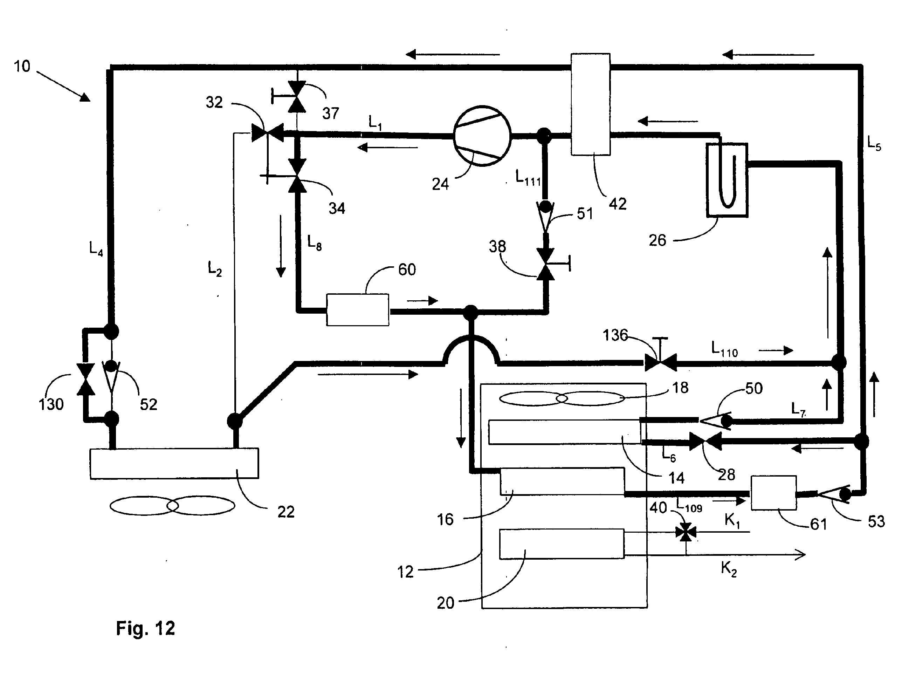

Zusätzlich kann durch ein Öffnen des Expansionsventils 28 der Verdampfer 14 verwendet und die Zuluft entfeuchtet werden (siehe Fig. 12).

Im in Fig. 12 dargestellten Reheat-Betrieb mit einem innerem Wärmeübertrager 42 wird der Kältemittelstrom nach dem Heizwärmeübertrager 16 aufgeteilt, wobei ein Teil des Kältemittelstrom durch den Verdampfer 14 und der andere Teil des Kältemittelstroms zur Wärmeaufnahme durch den inneren Wärmübertrager 42 zum Aussenwärmübertrager 22 fließt.

Falls der Außenwärmeübertrager 22 vereist ist, kann der Kreislauf durch das Ventil 37 in einen Abtaubetrieb geschaltet werden (siehe Fig. 13). Das Kältemittel fließt dann vom Kompressor 24 über Ventil 37 (Ventile 32 und 34 sind geschlossen) zum Expansionsorgan130, wird gedrosselt, und gibt dann Wärme im Außenwärmeübertrager 22 ab, wodurch der Außenwärmeübertrager 22 wieder aufgetaut wird. Das Kältemittel wird anschließend über das Ventil 136, den Kältemittelsammler 26 und den (funktionslosen) inneren Wärmeübertrager 42 zum Kompressor 24 zurückgeführt.

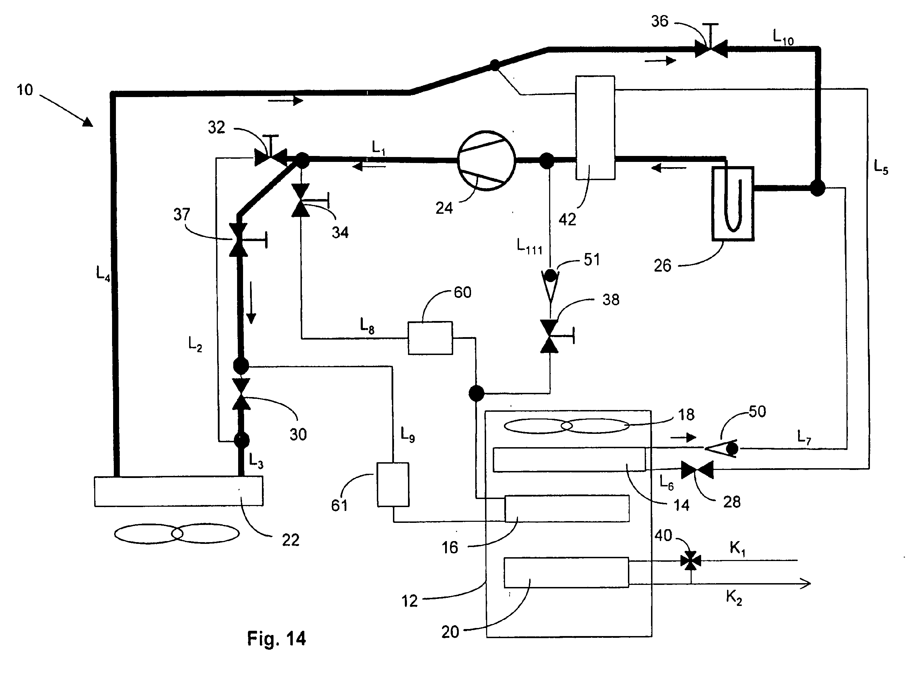

Fig. 14 zeigt den Abtaubetrieb für die Ausführungsform nach Fig. 9.

Die Nutzung des inneren Wärmeübertragers 42 auch im Wärmepumpenbetrieb hat den Vorteil einer höheren Leistung und eines besseren Wirkungsgrades als beim Betrieb ohne inneren Wärmeübertrager 42. Zudem reagiert der Kreislauf unempfindlicher auf Kältemittelverschiebungen.

Bei der dargestellten Schaltung ist der innere Wärmeübertrager 42 im Kühlbetrieb (Fig. 10) als Gegenstromschaltung und im Wärmepumpenbetrieb (Fig. 11) dagegen als Gleichstromschaltung realisiert. Dies hat den Vorteil, dass durch den Einfluß des inneren Wärmeübertragers 42 spürbar höhere Leistungen und ein besserer Wirkungsgrad bei gleichzeitig niedrigeren Heissgastemperaturen am Kompressoraustritt erzielt werden, als es bei einer Gegenstromschaltung der Fall wäre. Bei der Gegenstromschaltung könnten unvertretbar hohe Heissgastemperaturen am Kompressoraustritt auftreten.

Weiterhin wird bei dem dargestellten Ausführungsbeispiel nach Fig. 10 bis Fig. 12 der Außenwärmeübertrager 22 im Kühlbetrieb in umgekehrter Richtung als im Heizbetrieb durchströmt. Dies hat einen geringeren Druckverlust der Komponenten zur Folge. Um den Druckverlust des Außenwärmeübertragers 22 im Kühlbetrieb zu minimieren, werden die einzelnen Blöcke des Aussenwärmeübertragers 22 degressiv geschaltet, d.h. die Anzahl von parallel durchströmten Rohren nimmt im Verlauf der Strömung des Kältemittels ab. Dies ist hilfreich, da am Eintritt des Außenwärmeübertragers 22 die Gasdichte niedrig und deshalb eine große Querschnittsfläche für die Strömung wichtiger ist, als am Austritt, an dem die Dichte deutlich höher ist.

Dient der gleiche Außenwärmeübertrager 22 im Heizbetrieb als Verdampfer ist ein umgekehrter Verlauf der Querschnittsfläche wünschenswert, da die Dichte des Kältemittels im Lauf der Verdampfung und damit der Durchströmung des Außenwärmeübertragers 22 abnimmt. Dies wird dadurch erreicht, dass der Außenwärmeübertrager 22 im Heizbetrieb in umgekehrter Richtung als im Kühlbetrieb durchströmt wird.

Das Zuschalten des Heizwärmetauschers 20 erfolgt nur, wenn das Kühlmittel des Antriebsagreggats wärmer ist, als die den Heizwärmetauscher 20 anströmende Luft, so dass der Heizwärmetauscher 20 Wärme an die Luft abgibt und ihr nicht entzieht.

## Patentansprüche

1. Heiz-/Kühlkreislauf für ein Kraftfahrzeug mit einem Verdampfer (14) zur Abkühlung von einem Innenraum zuzuführender Luft, einem Heizwärmetauscher (16) zur Aufheizung der dem Innenraum zuzuführenden Luft, einem Außenwärmetauscher (22), mit einem Kompressor (24) zum Fördern von Kältemittel, einem ersten Expansionsorgan (28), das dem Verdampfer (14) zugeordnet ist, einem zweiten Expansionsorgan (30, 130), das dem Außenwärmetauscher (22) zugeordnet ist und Kältemittelleitungen (L₁ bis L₁₁₁), über die die vorgenannten Komponenten miteinander verbunden sind, **dadurch gekennzeichnet, daß** eine drosselbare Leitung (L₁₁, L₁₁₁) zwischen einer Verbindungsleitung zum Heizwärmetauscher (16) und einer Leitung oder Komponente auf niedrigem Systemdruck vorhanden ist.

2. Heiz-/Kühlkreislauf nach Anspruch 1, **dadurch gekennzeichnet, daß** die Verbindungsstelle zum niedrigen Systemdruck in einer Saugleitung zwischen einem Kältemittelsammler 26 und dem Kompressor 24 angeordnet ist.

3. Heiz-/Kühlkreislauf nach Anspruch 1 oder 2, **dadurch gekennzeichnet, daß** die drosselbare Leitung (L₁₁, L₁₁₁) ein Rückschlagventil 51 umfaßt.

4. Heiz-/Kühlkreislauf nach einem der Ansprüche 1 bis 3, **dadurch gekennzeichnet, daß** der Heizwärmetauscher (16) durch das Rückschlagventil 51 und mindestens zwei weiteren Ventilen (30, 34) abschottbar ist.

5. Heiz-/Kühlkreislauf nach einem der Ansprüche 1 bis 4, **dadurch gekennzeichnet, daß** in der Leitung (L₈, L₉, L₁₀₉) des Heizwärmetauschers mindestens ein Pufferbehälter (60, 61) zur Kompensation der Kältemittelmenge bei einer Kältemittelverlagerung zwischen den Betriebsarten vorhanden ist.

6. Heiz-/Kühlkreislauf nach einem der Ansprüche 1 bis 5, **dadurch gekennzeichnet, daß** ein erster Pufferbehälter (61) in der Leitung (L₉, L₁₀₉) mit der höchsten Dichte des Kältemittels im Kreislauf angeordnet ist.

7. Heiz-/Kühlkreislauf nach einem der Ansprüche 1 bis 6, **dadurch gekennzeichnet, daß** ein zweiter Pufferbehälter (60) einen Schalldämpfer zur Kompensation von Kompressorgeräuschen umfasst und in der Leitung (L₈) zwischen Heizwärmetauscher (16) und Kompressor (24) angeordnet ist.

8. Klimaanlage eines Kraftfahrzeuges mit einem Heiz-/Kühlkreislauf (10) nach einem der vorhergehenden Ansprüche.

9. Klimaanlage eines Kraftfahrzeuges mit einem Heiz-/Kühlkreislauf (10) nach Anspruch 8, **dadurch gekennzeichnet, daß** ein weiterer Heizwärmetauscher (20) zur Erwärmung der Luft vorgesehen ist, der mit Kühlmittel eines Antriebsaggregats beaufschlagbar ist.

10. Klimaanlage nach Anspruch 9, **dadurch gekennzeichnet, daß** der weitere Heizwärmetauscher (20) luftseitig nach dem ersten Heizwärmetauscher (16) angeordnet ist.

11. Klimaanlage nach Anspruch 9, **dadurch gekennzeichnet, daß** der weitere Heizwärmetauscher luftseitig vor dem ersten Heizwärmetauscher angeordnet ist.

## Claims

1. Heating/cooling circuit for a motor vehicle, with an evaporator (14) for cooling air to be fed to a vehicle interior, with a heating heat exchanger (16) for heating the air to be fed to the vehicle interior, with an external heat exchanger (22), with a compressor (24) for delivering refrigerant, with a first expansion element (28) assigned to the evaporator (14), with a second expansion element (30, 130) assigned to the external heat exchanger (22), and with refrigerant lines (L₁ to L₁₁₁) connecting the above components to one another, **characterised in that** a restrictable line (L₁₁, L₁₁₁) is provided between a connecting line to the heating heat exchanger (16) and a line or component under low system pressure.

2. Heating/cooling circuit according to claim 1, **characterised in that** the connecting point to the low system pressure is located in a suction line between an accumulator-drier 26 and the compressor 24.

3. Heating/cooling circuit according to claim 1 or 2, **characterised in that** the restrictable line (L₁₁, L₁₁₁) includes a check valve 51.

4. Heating/cooling circuit according to any of claims 1 to 3, **characterised in that** the heating heat exchanger (16) can be partitioned by the check valve 51 and at least two further valves (30, 34).

5. Heating/cooling circuit according to any of claims 1 to 4, **characterised in that** at least one buffer accumulator (60, 61) is provided in the line (L₈, L₉, L₁₀₉) of the heating heat exchanger to balance the refrigerant quantity if refrigerant is displaced between individual modes.

6. Heating/cooling circuit according to any of claims 1 to 5, **characterised in that** a first buffer accumulator (61) is located in the line (L₉, L₁₀₉) with the highest refrigerant density in the circuit.

7. Heating/cooling circuit according to any of claims 1 to 6, **characterised in that** a second buffer accumulator (60) incorporates a silencer to compensate for compressor noises and is located in the line (L₈) between the heating heat exchanger (16) and the compressor (24).

8. Air conditioning system of a motor vehicle with a heating/cooling circuit (10) according to any of the preceding claims.

9. Air conditioning system of a motor vehicle with a heating/cooling circuit (10) according to claim 8, **characterised in that** a further heating heat exchanger (20), to which a coolant of a drive unit can be admitted, is provided to heat the air.

10. Air conditioning system according to claim 9, **characterised in that** the further heating heat exchanger (20) is located downstream of the first heating heat exchanger (16) on the air side.

11. Air conditioning system according to claim 9, **characterised in that** the further heating heat exchanger is located upstream of the first heating heat exchanger on the air side.

## Revendications

1. Circuit de chauffage/refroidissement pour un véhicule automobile avec un évaporateur (14) pour le refroidissement d'air à amener à l'espace intérieur, un échangeur de chaleur de chauffage (16) pour le réchauffement de l'air à amener à l'espace intérieur, un échangeur de chaleur extérieur (22), avec un compresseur (24) pour le transport de réfrigérant, un premier organe d'expansion (28), qui est attribué à l'évaporateur (14), un second organe d'expansion (30, 130) qui est attribué à l'échangeur de chaleur externe (22) et des conduites à réfrigérant (L₁ à L₁₁₁), par lesquels les composants mentionnés plus haut sont reliés entre eux, **caractérisé en ce qu'**une conduite (L₁, L₁₁₁) étranglable est présente entre une conduite de liaison allant à l'échangeur de chaleur de chauffage (16) et une conduite ou un composant ,à une pression de système faible.

2. Circuit de chauffage/réfrigération selon la revendication 1, **caractérisé en ce que** le point de liaison avec la faible pression de système est disposé dans une conduite d'aspiration entre un collecteur de réfrigérant 26 et le compresseur 24.

3. Circuit de chauffage/réfrigération selon la revendication 1 ou 2, **caractérisé en ce que** la conduite (L₁₁, L₁₁₁) étranglable comprend un clapet antiretour 51.

4. Circuit de chauffage/réfrigération selon l'une quelconque des revendications 1 à 3, **caractérisé en ce que** l'échangeur de chaleur de chauffage (16) peut être cloisonné par le clapet antiretour 51 et au moins deux autres vannes (30, 34).

5. Circuit de chauffage/réfrigération selon l'une quelconque des revendications 1 à 4, **caractérisé en ce que** dans la conduite (L₈, L₉, L₁₀₉) de l'échangeur de chaleur de chauffage est présent au moins un récipient tampon (60, 61) pour la compensation de la quantité de réfrigérant lors d'un déplacement de réfrigérant entre les modes de service.

6. Circuit de chauffage/réfrigération selon l'une quelconque des revendications 1 à 5, **caractérisé en ce qu'**un premier récipient tampon (61) est disposé dans la conduite (L₉, L₁₀₉) avec la densité maximale du réfrigérant dans le circuit.

7. Circuit de chauffage/réfrigération selon l'une quelconque des revendications 1 à 6, **caractérisé en ce qu'**un second récipient tampon (60) comprend un silencieux pour la compensation de bruits de compresseur et est disposé dans la conduite (L₈) entre l'échangeur de chaleur de chauffage (16) et le compresseur (24).

8. Installation de climatisation d'un véhicule automobile avec un circuit de chauffage/réfrigération (10) selon l'une quelconque des revendications précédentes.

9. Installation de climatisation d'un véhicule automobile avec un circuit de chauffage/réfrigération (10) selon la revendication 8, **caractérisée en ce qu'**un autre échangeur de chaleur de chauffage (20) est prévu pour le réchauffement de l'air, lequel peut être alimenté avec du réfrigérant d'un ensemble d'entraînement.

10. Installation de climatisation selon la revendication 9, **caractérisée en ce que** l'autre échangeur de chaleur de chauffage (20) est disposé côté air après le premier échangeur de chaleur de chauffage (16).

11. Installation de climatisation selon la revendication 9, **caractérisée en ce que** l'autre échangeur de chaleur de chauffage est disposé côté air avant le premier échangeur de chaleur de chauffage.
